# EUROPEAN PATENT SPECIFICATION

(11) **EP 0 618 354 B1**
(45) Date of publication and mention of the grant of the patent: **22.05.1996**
(21) Application number: 94300542.1
(22) Date of filing: 25.01.1994
(51) Int. Cl.: F02B 39/00

(54) **Support and cooling arrangement for a turbocharger in a diesel engine**
Trage- und Kühlvorrichtung für einen Turbolader eines Dieselmotors
Dispositif de support et de refroidissement pour un turbocompresseur d'un moteur diesel

(30) Priority: 27.01.1993 FI 930329
(43) Date of publication of application: 05.10.1994
(73) Proprietor: WARTSILA DIESEL INTERNATIONAL LTD OY, 00530 Helsinki (FI)
(72) Inventor: Nikula, Arto, SF-66510 Merikaarto (FI); Koivikko, Sami, SF-65200 Vaasa (FI)
(74) Representative: Newby, John Ross

(56) References cited:
- EP-A- 0 302 245
- DE-A- 2 833 790
- DE-C- 3 532 695
- FR-A- 2 389 764
- US-A- 2 551 307

## Description

The invention relates to a support and cooling arrangement for a turbocharger in a large diesel engine, the arrangement being according to the preamble of claim 1.

A large diesel engine as referred to herein means an engine usable for example as the main propulsion engine or as an auxiliary engine for a ship or for power generation in the form of heat and/or electricity in a power plant.

According to known techniques the bracket for a turbocharger in this kind of large engine has usually been made of welded-together structures supporting pipework for the cooling water required for the cooling of the turbocharger. As a result of this the number of elements and pipe joints has been great and the manufacturing and assembling of the brackets has been laborious and time-consuming. In addition the numerous joints required give rise to uncertainty as to their long-term tightness, because the vibrations, caused by the engine, stress the piping, joints and supporting structures of the bracket. Examples of known turbocharger support and cooling apparatus are shown in DE-A-2 833 790 which is considered to be the closest prior art and EP-A-0 302 245. However EP-A-0 302 245 only discloses a small engine and does not disclose the use of a separate support unit for the turbocharger.

An aim of the invention is to create a new supporting arrangement for a turbocharger by means of which the drawbacks mentioned above have essentially been avoided. A further aim of the invention is to integrate a number of possible different additional functions to the structure and in that way to reduce the number of different elements, which makes the assembling easier and is advantageous with regard to space requirements. A still further aim is to improve the structural reliability of the supporting arrangement particularly in the face of engine vibrations.

These aims can be met with an arrangement according to claim 1.

In this way the components required for the cooling of the turbocharger are essentially integrated into a unitary supporting structure which substantially reduces the number of component parts and joints required and at the same time improves the reliability of the structure.

Integration can be further developed so that the body part comprises a duct for leading cooling water supplied from the engine block into the second water duct upstream of the thermostatic valve means. In addition the first water duct can be arranged to branch inside the body part into two separate ducts so that one duct can lead cooling water into an inlet chamber provided in the turbocharger for the exhaust gases and the other duct can lead cooling water into an outlet chamber in the turbocharger for the exhaust gases.

The bracket base can define a generally plane surface and can include a number of supporting elements extending therefrom, and to which the turbocharger is fixed, so that the turbocharger is supported in spaced-apart relationship to the generally plane surface of the bracket base. This arrangement facilitates maintenance actions and cleaning of the turbocharger especially if washing equipment for the turbocharger is provided as a stationary component of the body part. Such washing equipment can be housed in a cavity specially provided for it in the bracket base.

Advantageously the body part also comprises a flat flange member which is located substantially perpendicularly with respect to the bracket base and by means of which the body part can be fixed to the engine block. With this arrangement the flange member can also include an inlet opening for feeding cooling water from the engine block to the body part.

The vibrations caused by the engine can most advantageously be damped if the body part with its ducts constitutes a unitary casting.

The invention will now be further described, by way of example, with reference to the accompanying drawings, in which:
Figure 1 shows a side view of a support and cooling arrangement for a turbocharger according to the invention as installed,
Figure 2 shows a front view of the arrangement of Figure 1,
Figure 3 shows a part of the body of the bracket included in the arrangement of Figure 1, and

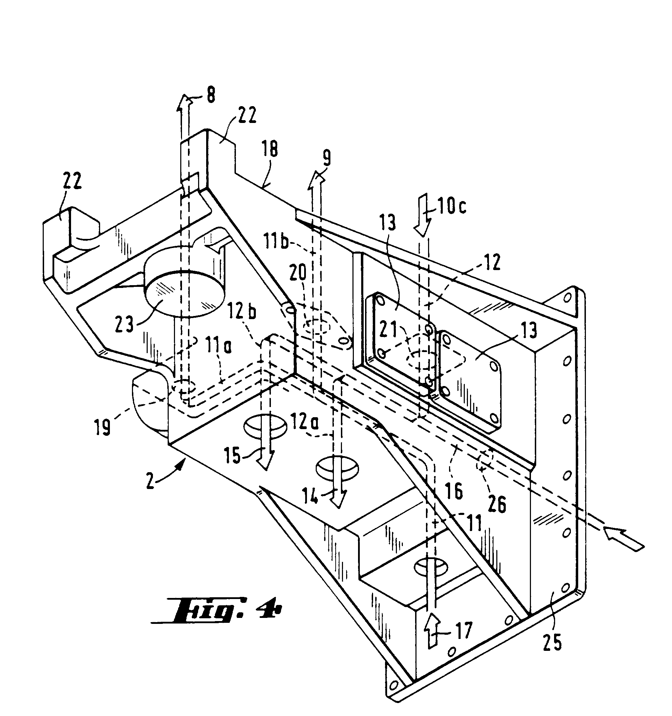

Figure 4 shows the body part of Figure 3 seen from another direction and provided with arrows representing cooling water ducts and cooling water flows led therethrough.

In the drawings, 1 indicates a turbocharger, known per se, which is to be connected to a large diesel engine and which includes an exhaust gas inlet chamber 4, to which the exhaust gases coming from the engine are led, and an exhaust gas outlet chamber 5, from which the exhaust gases are led away from the turbocharger through an opening 5a provided in a wall of the outlet chamber 5. Charge air for the engine is sucked into the turbocharger 1 through a suction unit (e.g. a filter) 6 and is fed into the engine by means of a compressor (not shown) through a pipe 7.

According to the invention the support arrangement for the turbocharger of a large diesel engine includes a body part 2 which supports the turbocharger 1 and which is, by means of flanges 25, fixed to the block 3 of the engine. The body part 2 includes a first cooling water duct 11 which leads cooling water fed from a water pump (not shown) by means of a pipe 17 further through a duct branch 11a, a connecting opening 19 and a pipe 8 to the inlet chamber 4 for exhaust gases fed to the turbocharger and through a duct branch 11b, a connecting opening 20 and a pipe 9 to the outlet chamber 5 for exhaust gases in the turbocharger. The cooling water leaves the turbocharger 1 through pipes 10a, 10b and 10c and flows through a connecting opening 21 in the body part 2 to pass into a second cooling water duct 12 included in the body part 2. The body part 2 also mounts thermostatic valve means 13 which, on the basis of the temperature of the cooling water leaving the turbocharger, feeds the cooling water either through a duct branch 12a and a pipe 14 connected to the body part 2 into the water pump for recirculation, or through a duct branch 12b and a pipe 15 connected to the body part 2 into a cooler (not shown) prior to recirculation through the water pump. The thermostatic valve means 13 can comprise one or more non-electrical thermostatic valves and the embodiment illustrated shows two thermostatic valves operating in parallel, by means of which it is possible to provide more accurate control for the significant volume of cooling water required for a large diesel engine turbocharger. Since the valves 13 are received in cavities provided in the body part 2 their fitting in place is simply achieved.

The body part 2 also includes a duct 16 connected to the cooling water duct 12 and arranged to be connected to the cooling water ducts of the engine block 3 through an inlet opening 26 so that the thermostatic valve means 13 also controls the circulation of the cooling water led from the engine block, according to need, on the basis of the temperature of the cooling water.

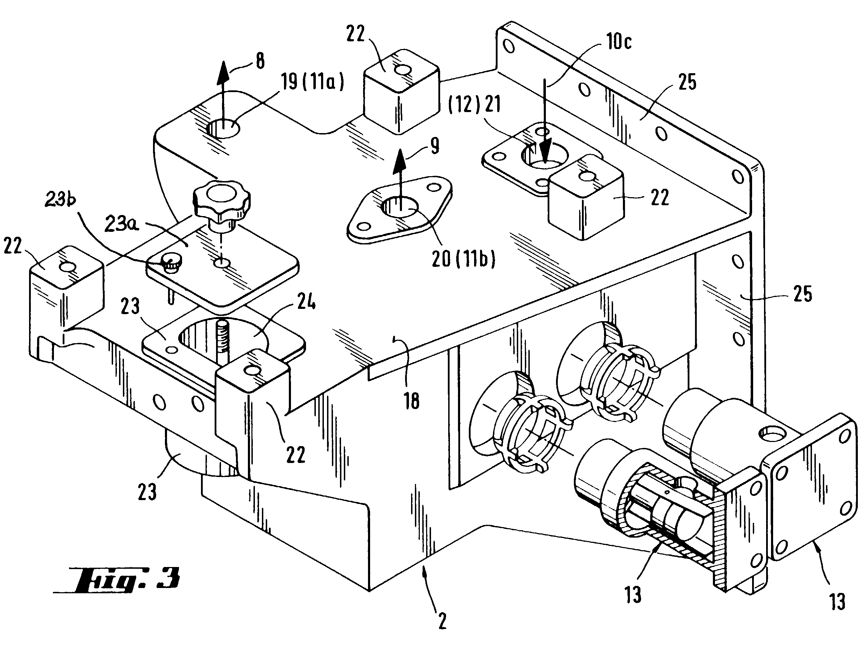

As will be apparent from Figure 3 the body part 2 comprises a generally plane bracket base 18, in which are located the connection openings 19, 20 and 21 for the cooling water pipes 8, 9 and 10c to be connected to the turbocharger. The bracket base 18 also includes supporting elements 22, to which the turbocharger 1 is fixed, for example, by means of bolts. With this arrangement the pipe connectors remain visible which is advantageous because their condition can easily be monitored and they can be adjusted if required.

By manufacturing the body part 2 with its ducts as a unitary casting the vibrations caused by the engine can be effectively damped. When the water ducts providing cooling for the turbocharger 1 are integrated to the body part 2 serving as a bracket, a construction is provided that is advantageous both from the viewpoint of space requirements and also from the viewpoint of ease of installation. In addition the construction is more reliable with regard to the security of the joints because of the damping of the vibrations possible with the arrangement described.

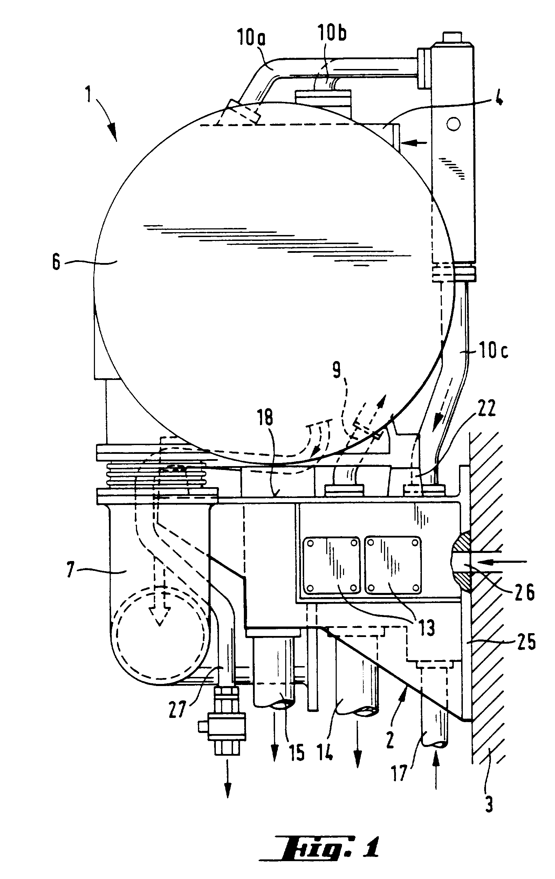

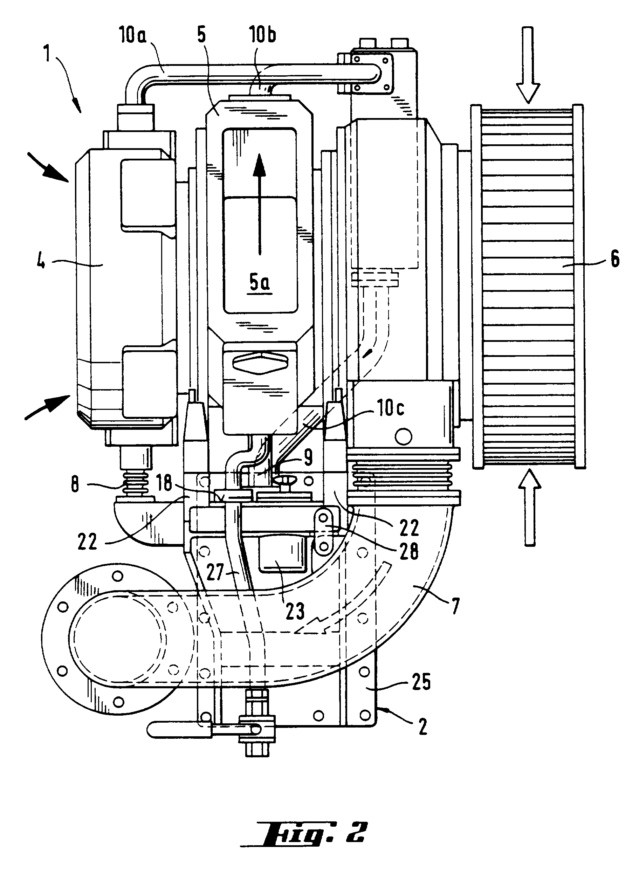

It is clear that other functions also can be integrated to the body part 2 of a support arrangement according to the invention, which can be used to support and sustain different elements and pipes. Thus, for example, the body part 2 can be provided in advance with positions for attaching temperature and/or pressure detectors for making measurements on the cooling water. In the example shown in the drawings a cavity for a washing apparatus 23, known per se, has been provided in the body part 2, the apparatus being used for washing the compressor of the turbocharger. The washing apparatus 23 designed to be located in the cavity, includes a container and a valve with its driving mechanism which is actuated when required by pressing a button 23b in a cover plate 23a of the apparatus 23 (see Figure 3). Due to the provision of a cavity for the apparatus 23 in the body part 2 it is not necessary to construct a separate bracket if the washing apparatus is to be installed, or to cover the cavity if the apparatus 23 is not employed. An outlet pipe 27 for the wash water from an installed compressor washing apparatus 23 is shown in Figures 1 and 2 mounted on the body part 2.

Figure 2 further shows a flange arrangement 28, by means of which the feed pipe 7 for the charge air fed to the engine can be firmly supported on the body part 2.

The invention is not limited to the embodiment illustrated since several modifications thereof are feasible within the scope of the following claims.

## Claims

1. A support and cooling arrangement for a turbocharger (1) of a large diesel engine, comprising a first water duct (11), through which cooling water can be fed to the turbocharger (1), and a second water duct (12), through which cooling water can be led away from the turbocharger (1), a body part (2) supported to the block (3) of the diesel engine which is provided with a bracket base (18) for supporting the turbocharger (1) and which includes said second water duct (12), and thermostatic valve means (13), characterised in that the body part (2) includes said first water duct (11), in that the bracket base (18) includes respective connecting openings (19, 20, 21) to the first (11) and second (12) water ducts, and in that the thermostatic valve means (13) is supported by the body part (2) in communication with the said second water duct (12) and which, on the basis of the temperature of the cooling water leaving the turbocharger (1), is arranged to lead the cooling water on the one hand to a duct (14) for recirculation and on the other hand to a duct (15) for cooling.

2. A support and cooling arrangement according to claim 1, **characterised in that** the body part (2) comprises a duct (16) for leading cooling water supplied from the engine block (3) into the second water duct (12) upstream of the thermostatic valve means (13).

3. A support and cooling arrangement according to claim 1 or 2, **characterised in that** the first water duct (11) is arranged to branch inside the body part (2) into two separate ducts (11a, 11b) so that one duct (11a) is arranged to lead cooling water into an exhaust gas inlet chamber (4) provided in the turbocharger (1) and the other duct (11b) is arranged to lead cooling water into an exhaust gas outlet chamber (5) of the turbocharger (1).

4. A support and cooling arrangement according to any one preceding claim, **characterised in that** the bracket base (18) defines a generally plane surface which includes a plurality of supporting elements (22) extending therefrom to which the turbocharger (1) is fixed so that the turbocharger (1) is held in spaced-apart relationship to the generally plane surface of the bracket base (18).

5. A support and cooling arrangement according to any one preceding claim, **characterised in that** a washing device (23) for the turbocharger (1) is arranged in a cavity in the body part (2).

6. A support and cooling arrangement according to any one preceding claim, **characterised in that** the body part (2) comprises a flange member (25), which is located substantially perpendicularly with respect to the bracket base (18) and by means of which the body part (2) can be fixed to the engine block (3), and that the flange member (25) comprises an inlet opening (26) for feeding cooling water from the engine block (3) into the body part (2).

7. A support and cooling arrangement according to any one preceding claim, **characterised in that** the body part (2) with its ducts constitutes a unitary casting.

8. A support and cooling arrangement according to any one preceding claim, **characterised in that** the thermostatic valve means comprises at least one non-electrical thermostatic valve (13).

9. A support and cooling arrangement according to claim 8, **characterised in that** two thermostatic valves (13) arranged to operate in parallel are provided in cavities in the bracket base (18).

## Patentansprüche

1. Trage- und Kühlvorrichtung für einen Turbolader (1) eines großen Dieselmotors mit einem ersten Wasserrohr (11), durch welches Kühlwasser dem Turbolader (1) zugeführt werden kann, und einem zweiten Wasserrohr (12), durch welches Kühlwasser vom Turbolader (1) weggeführt werden kann, einem Rumpfteil (2), das am Block (3) des Dieselmotors abgestützt ist, das mit einer Trägerbasis (18) zum Abstützen des Turboladers (1) versehen ist, und das zweite Wasserrohr 12 und eine thermostatische Ventilvorrichtung (13) umfaßt, **dadurch gekennzeichnet**, daß das Rumpfteil (2) das erste Wasserrohr (11) umfaßt, daß die Trägerbasis (18) jeweils Verbindungsöffnungen (19, 20, 21) für das erste (11) und das zweite (12) Wasserrohr umfaßt, und daß die thermostatische Ventilvorrichtung (13), in Verbindung mit dem zweiten Wasserrohr (12) vom Rumpfteil (2) gestützt wird, und so angeordnet ist , daß sie auf der Basis der Temperatur des den Turbolader (1) verlassenden Kühlwassers das Kühlwasser einerseits zu einem Rohr (14) für eine Rezirkulation und andererseits zu einem Rohr (15) zur Kühlung leitet.

2. Trage- und Kühlvorrichtung nach Anspruch 1, **dadurch gekennzeichnet,** daß das Rumpfteil (2) ein Rohr (16) für das Leiten des Kühlwasser, das vom Maschinenblock (3) geliefert wird, in das zweite Wasserrohr (12) stromaufwärts der thermostatischen Ventilvorrichtung (13), umfaßt.

3. Trage- und Kühlvorrichtung nach Anspruch 1 oder 2, **dadurch gekennzeichnet,** daß das erste Wasserrohr (11) so angeordnet ist, daß es im Rumpfteil (2) in zwei getrennte Rohre (11a, 11b) verzweigt, so daß ein Rohr (11a) so angeordnet ist, daß es das Kühlwasser in eine Abgaseinlaßkammer (4) im Turbolader (1) leitet, und das andere Rohr (11b) so angeordnet ist, daß es das Kühlwasser in eine Abgasauslaßkammer (5) des Turboladers (1) leitet.

4. Trage- und Kühlvorrichtung nach einem der vorhergehenden Ansprüche, **dadurch gekennzeichnet,** daß die Trägerbasis (18) eine im allgemeinen ebene Oberfläche festlegt, die eine Vielzahl von Stützelementen (22) einschließt, die von ihr wegstehen, und an denen der Turbolader (1) befestigt ist, so daß der Turbolader (1) in einem Abstand zur im allgemeinen ebenen Oberfläche der Trägerbasis (18) gehalten wird.

5. Trage- und Kühlvorrichtung nach einem der vorhergehenden Ansprüche, **dadurch gekennzeichnet,** daß eine Waschvorrichtung (23) für den Turbolader (1) in einem Hohlraum des Rumpfteils (2) angeordnet ist.

6. Trage- und Kühlvorrichtung nach einem der vorhergehenden Ansprüche, **dadurch gekennzeichnet,** daß das Rumpfteil (2) ein Flanschteil (25) umfaßt, das im wesentlichen rechtwinklig zur Trägerbasis (18) angeordnet ist, und mit dem das Rumpfteil (2) am Maschinenblock (3) befestigt werden kann, und dadurch, daß das Flanschteil (25) eine Einlaßöffnung (26) zur Zuführung von Kühlwasser vom Maschinenblock (3) in das Rumpfteil (2) umfaßt.

7. Trage- und Kühlvorrichtung nach einem der vorhergehenden Ansprüche, **dadurch gekennzeichnet,** daß das Rumpfteil (2) mit seinen Röhren ein einheitliches Gußstück darstellt.

8. Trage- und Kühlvorrichtung nach einem der vorhergehenden Ansprüche, **dadurch gekennzeichnet,** daß die thermostatische Ventilvorrichtung mindestens ein nichtelektrisches Thermostatventil (13) umfaßt.

9. Trage- und Kühlvorrichtung nach Anspruch 8, **dadurch gekennzeichnet**, daß zwei Thermostatventile (13) so in Hohlräumen der Trägerbasis (18) angeordnet sind, daß sie parallel arbeiten.

## Revendications

1. Agencement de support et de refroidissement pour un turbocompresseur (1) d'un gros moteur diesel, comprenant un premier conduit d'eau (11), au travers duquel de l'eau de refroidissement peut être amenée au turbocompresseur (1), et un second conduit d'eau (12), au travers duquel de l'eau de refroidissement peut sortir du turbocompresseur (1), une partie de corps (2), supportée sur le bloc (3) du moteur diesel, qui est pourvue d'une base de support (18) destinée à supporter le turbocompresseur (1) et qui comprend ledit second conduit d'eau (12), et des moyens de soupape thermostatique (13), caractérisé en ce que la partie de corps (2) comprend ledit premier conduit d'eau (11), en ce que la base de support (18) comprend des ouvertures de raccordement respectives (19, 20, 21) avec les premier (11) et second (12) conduits d'eau, et en ce que les moyens de soupape thermostatique (13) sont supportés par la partie de corps (2) en communication avec ledit second conduit d'eau (12) et, en fonction de la température de l'eau de refroidissement quittant le turbocompresseur (1), sont conçus pour diriger l'eau de refroidissement d'une part vers un conduit (14) pour sa recirculation et d'autre part vers un conduit (15) pour son refroidissement.

2. Agencement de support et de refroidissement selon la revendication 1, caractérisé en ce que la partie de corps (2) comprend un conduit (16) destiné à canaliser l'eau de refroidissement fournie par le bloc-moteur (3) dans le second conduit d'eau (12) en amont des moyens de soupape thermostatique (13).

3. Agencement de support et de refroidissement selon la revendication 1 ou 2, caractérisé en ce que le premier conduit d'eau (11) est conçu pour s'embrancher à l'intérieur de la partie de corps (2) en deux conduits séparés (11a, 11b) de sorte qu'un premier conduit (11a) est conçu pour conduire l'eau de refroidissement dans une chambre d'admission des gaz d'échappement (4) disposée dans le turbocompresseur (1) et que l'autre conduit (11b) est conçu pour conduire l'eau de refroidissement dans une chambre de sortie des gaz d'échappement (5) du turbocompresseur (1).

4. Agencement de support et de refroidissement selon l'une quelconque des revendications précédentes, caractérisé en ce que la base du support (18) définit une surface généralement plane qui comprend une pluralité d'éléments de support (22) s'étendant à partir de celle-ci, auxquels est fixé le turbocompresseur (1) de sorte que le turbocompresseur (1) est maintenu en relation espacée par rapport à la surface généralement plane de la base du support (18).

5. Agencement de support et de refroidissement selon l'une quelconque des revendications précédentes, caractérisé en ce qu'un dispositif de rinçage (23) du turbocompresseur (1) est disposé dans une cavité dans la partie de corps (2).

6. Agencement de support et de refroidissement selon l'une quelconque des revendications précédentes, caractérisé en ce que la partie de corps (2) comprend un élément de bride (25), qui est situé sensiblement perpendiculairement par rapport à la base du support (18) et au moyen duquel la partie de corps (2) peut être fixée au bloc-moteur (3), et en ce que l'élément de bride (25) comprend une ouverture d'entrée (26) permettant d'admettre de l'eau de refroidissement provenant du bloc-moteur (3) dans la partie de corps (2).

7. Agencement de support et de refroidissement selon l'une quelconque des revendications précédentes, caractérisé en ce que la partie de corps (2) avec ses conduits constitue une pièce coulée unitaire.

8. Agencement de support et de refroidissement selon l'une quelconque des revendications précédentes, caractérisé en ce que les moyens de soupape thermostatique comprennent au moins une soupape thermostatique non électrique (13).

9. Agencement de support et de refroidissement selon la revendication 8, caractérisé en ce que deux soupapes thermostatiques (13) conçues pour fonctionner en parallèle sont disposées dans des cavités ménagées dans la base du support (18).
